# EUROPEAN PATENT APPLICATION

(11) **EP 4 815 060 A1**
(43) Date of publication of application: **30.09.2026**
(21) Application number: 26163701.1
(22) Date of filing: 10.03.2026
(51) Int. Cl.: H01M 4/525, C01G 53/504

(54) **CATHODE ACTIVE MATERIAL, CATHODE MIXTURE, BATTERY, AND METHOD FOR PRODUCING CATHODE ACTIVE MATERIAL**

(30) Priority: 25.03.2025 JP 2025049851
(71) Applicant: Toyota Jidosha Kabushiki Kaisha, Toyota-shi, Aichi-ken 471-8571 (JP)
(72) Inventor: OHSAWA, Ryosuke, Toyota-shi, 471-8571 (JP)
(74) Representative: D Young & Co LLP

(57) **Abstract**

A main object of the present disclosure is to provide a cathode active material of which resistance is reduced. The present disclosure achieves the object by providing a cathode active material including: a crystalline primary particle containing Li, TM, which is a transition metal, and O, wherein the cathode active material is an aggregate configured by a plurality of the primary particle; in a pore diameter distribution obtained by a mercury press-in method, a peak is present in a range of 20 nm or more and 300 nm or less; and when Dₐᵥₑ designates an average particle size of the aggregate, d₁₀ designates 10% accumulation particle size of the primary particle, d₅₀ designates 50% accumulation particle size of the primary particle, and d₉₀ designates 90% accumulation particle size of the primary particle, the cathode active material satisfies 0.075 ≤ d₅₀/Dₐᵥₑ ≤ 1, and 0.4 ≤ (d₉₀ - d₁₀)/d₅₀ ≤ 4.0.

## Description

### Technical Field

The present disclosure relates to a cathode active material, a cathode mixture, a battery, and a method for producing the cathode active material.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. As a cathode active material used for a battery, an active material including a transition metal such as Ni, Co, and Mn has been known.

For example, Patent Literature 1 discloses a method for producing a lithium secondary battery, the method including: a step of producing a first cathode active material by mixing lithium composite transition metal oxides with small particle size, of which average particle size (D₅₀) is less than 7 µm, with a boron-containing raw material, and performing heat treatment thereto; and a step of producing a second cathode active material by mixing lithium composite transition metal oxides with large particle size, of which average particle size (D₅₀) is 8 µm or more, with a boron-containing raw material, and performing heat treatment thereto.

### Citation List

### Patent Literatures

Patent Literature 1: Japanese Unexamined Patent Publication (JP-A) No. 2023-543242

### Summary of Disclosure

### Technical Problem

From a viewpoint of improving performance of a battery, reduction of resistance has been required. The present disclosure has been made in view of the above circumstances and a main object thereof is to provide a cathode active material of which resistance is reduced.

### Solution to Problem

[1] A cathode active material comprising:
   a crystalline primary particle containing Li, TM, which is a transition metal, and O, wherein
   the cathode active material is an aggregate configured by a plurality of the primary particle;
   in a pore diameter distribution obtained by a mercury press-in method, a peak is present in a range of 20 nm or more and 300 nm or less; and
   when Dₐᵥₑ designates an average particle size of the aggregate, d₁₀ designates 10% accumulation particle size of the primary particle, d₅₀ designates 50% accumulation particle size of the primary particle, and d₉₀ designates 90% accumulation particle size of the primary particle, the cathode active material satisfies 0.075 ≤ d₅₀/Dₐᵥₑ ≤ 1, and 0.4 ≤ (d₉₀ - d₁₀)/d₅₀ ≤ 4.0.
[2] The cathode active material according to [1], wherein the peak is present in a range of 30 nm or more and 200 nm or less in the pore diameter distribution.
[3] The cathode active material according to [1] or [2], wherein the d₅₀ is 0.5 µm or more.
[4] The cathode active material according to any one of [1] to [3], wherein the primary particle contains at least one kind of Ni, Co and Mn as the TM.
[5] The cathode active material according to any one of [1] to [4], wherein the primary particle includes a layered rock salt type crystal structure.
[6] The cathode active material according to any one of [1] to [5], wherein B (boron) is present in an interface between adjacent the primary particle in the aggregate.
[7] A cathode mixture comprising the cathode active material according to any one of [1] to [6].
[8] A battery comprising a cathode active material layer containing a cathode active material, an anode active material layer containing an anode active material, and an electrolyte layer arranged between the cathode active material layer and the anode active material layer, wherein
   the cathode active material layer contains the cathode mixture according to [7].
[9] A method for producing the cathode active material according to any one of [1] to [6], the method comprising:
   a first burning step of burning a mixture containing a transition metal hydroxide containing the TM, a lithium hydroxide, and a Li source other than the lithium hydroxide, to obtain a burned substance,
   a granulating step of granulating a composition, which is produced by crushing the burned substance to form a crushed product, and adding a coating material to the crushed product, so as to obtain a granulated body, and
   a second burning step of burning the granulated body to evaporate or decompose the coating material by heat.
[10] The method for producing the cathode active material according to [9], wherein the coating material is a boric acid.

### Advantageous Effects of Disclosure

The present disclosure exhibits an effect of providing a cathode active material of which resistance is reduced.

### Brief Description of Drawings

FIG. 1 is a schematic cross-sectional view exemplifying the cathode active material in the present disclosure.
FIG. 2 is a schematic cross-sectional view exemplifying the battery in the present disclosure.
FIG. 3 is a flow chart exemplifying the method for producing the cathode active material in the present disclosure.

### Description of Embodiments

Embodiments will be explained below with reference to drawings. However, the present disclosure is enforceable in a variety of different forms, and thus should not be taken as is limited to the contents described in the embodiments exemplified as below. Also, the drawings may show width, thickness, and shape of each part schematically comparing to the actual form in order to explain more clearly in some cases; however, it is merely an example, and thus does not limit the interpretation.

### A. Cathode active material

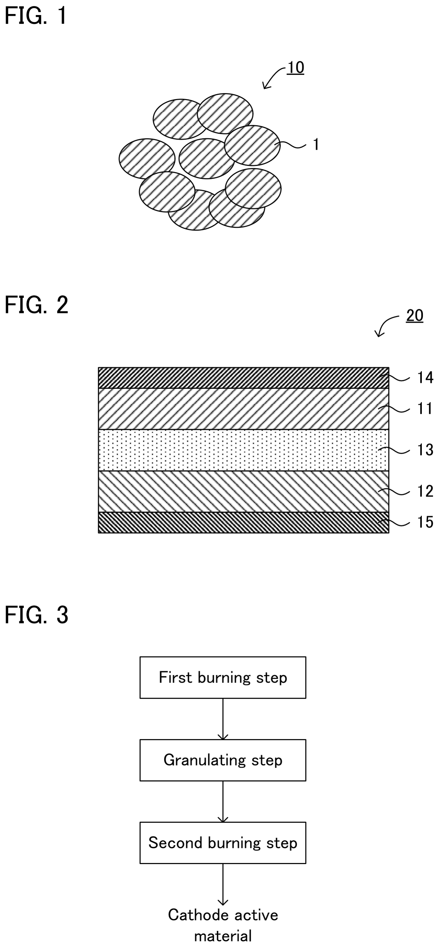

FIG. 1 is a schematic cross-sectional view exemplifying the cathode active material in the present disclosure. As shown in FIG. 1, cathode active material 10 includes crystalline primary particle 1 containing Li, TM, which is a transition metal, and O. Also, the cathode active material 10 is an aggregate configured by a plurality of the primary particle 1. Also, in the cathode active material 10, in a pore diameter distribution obtained by a mercury press-in method, a peak is present in a range of 20 nm or more and 300 nm or less. Further, when Dₐᵥₑ designates an average particle size of the aggregate, d₁₀ designates 10% accumulation particle size, d₅₀ designates 50% accumulation particle size, and d₉₀ designates 90% accumulation particle size of the primary particle 1, d₅₀/Dₐᵥₑ, and (d₉₀ - d₁₀)/d₅₀ are in the specified range.

According to the present disclosure, in a pore diameter distribution obtained by a mercury press-in method, since a peak is present in a range of 20 nm or more and 300 nm or less, and d₅₀/Dₐᵥₑ and (d₉₀ - d₁₀)/d₅₀ are in the specified range, the resistance of the cathode active material is reduced. In specific, as shown in FIG. 1, when the minute void (void having a pore diameter of 20 nm or more and 300 nm or less) is present inside the aggregate of the primary particle 1, an effect of improving the ion conductivity inside the aggregate can be obtained.

Also, in the present disclosure, d₅₀/Dₐᵥₑ and (d₉₀ - d₁₀)/d₅₀ are in the specified range. The inventor of the present disclosure has discovered from the researches that burning at the time of the production process tends to make the particle size of the primary particles configuring the aggregate uniform. Meanwhile, the inventor has positively tried to make the particle size of the primary particles configuring the aggregate non-uniform. In specific, as described later, it has been found out that the particle size of the primary particles can be made non-uniform by using two kinds of Li sources of which reaction temperatures differ from one another, and by burning after granulating using a coating material. As a result, the ion conductivity inside the aggregate improves, and the cathode active material of which resistance is reduced is obtained.

Here, as a cathode active material, a polycrystalline active material and a single crystalline active material have been conventionally known. In the polycrystalline active material, a plurality of the primary particle (extremely minute primary particle) is usually packed in a dense state. Meanwhile, in the single crystalline active material, the primary particle with large particle diameter does not aggregate, and is present as one independent particle. Although the single crystalline active material is not easily cracked during charge and discharge and is superior in terms of durability compared to the polycrystalline active material, the specific surface area is large, and thus the resistant component is accumulated by repeating charging and discharging, and the resistance increase over time easily occurs. In the present disclosure, a plurality of the primary particles configures the aggregate. As a result, the specific surface area can be made smaller compared to that of the primary particle alone. As a result, it is presumed that the accumulation of the resistant component by repeating charging and discharging can be inhibited.

As described above, Patent Literature 1 discloses a method for producing a lithium secondary battery, the method including: a step of producing a first cathode active material by mixing lithium composite transition metal oxides with small particle size, of which average particle size (D₅₀) is less than 7 µm, with a boron-containing raw material, and performing heat treatment thereto; and a step of producing a second cathode active material by mixing lithium composite transition metal oxides with large particle size, of which average particle size (D₅₀) is 8 µm or more, with a boron-containing raw material, and performing heat treatment thereto. Also, Patent Literature 1 discloses that a LBO phase is formed on a surface of the cathode active material by boron coating with a boron-containing raw material, but neither describes nor suggests about controlling the state inside the aggregate by the boron-containing raw material.

### 1. Primary particle

The primary particle in the present disclosure is a crystalline particle containing Li, TM, which is a transition metal, and O. Examples of the crystal structure of the primary particle may include a layered rock salt type and a spinel type, and the layered rock salt type is preferable. Also, the primary particle may include a crystal structure belonging to a space group R-3m.

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and W.

The primary particle preferably contains at least Ni. The reason therefor is to obtain a cathode active material with excellent capacity properties. The ratio of Ni included in the primary particle when all the transition metals (TM) included in the primary particle is 1 part by mol is, for example, 0.25 parts by mol or more, may be 0.33 parts by mol or more, may be 0.50 parts by mol or more, may be 0.75 parts by mol or more, may be 0.80 parts by mol or more, and may be 0.90 parts by mol or more. The capacity properties improve when the ratio of Ni is increased.

The primary particle may or may not contain Co. The ratio of Co included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Co included in the primary particle is, for example, 0.40 parts by mol or less, and may be 0.20 parts by mol or less.

The primary particle may or may not contain Mn. The ratio of Mn included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Mn included in the primary particle is, for example, 0.40 parts by mol or less, and may be 0.20 parts by mol or less.

The primary particle preferably contains at least one kind of Ni, Co, and Mn. The total ratio of Ni, Co, and Mn included in the primary particle when all the transition metals (TM) included in the primary particle is 1 part by mol is, for example, 0.80 parts by mol or more, may be 0.90 parts by mol or more, and may be 0.95 parts by mol or more. Incidentally, "the total of Ni, Co, and Mn" includes the case where the ratio of one kind or two kinds of Ni, Co, and Mn is 0.

The primary particle may contain other metal M¹ (including semimetal) other than Li and the TM, in addition to Li and the TM. Examples of the other metal M¹ may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, but it may be a composition represented by a general formula LiₓNaₐCo_{b}Mn_{c}O_{y}, in which 0.1 ≤ x ≤ 1.5, 0.5 ≤ a ≤ 1.0, 0 ≤ b ≤ 0.3, 0 ≤ c ≤ 0.3, a+b+c = 1.0, and 1.5 ≤ y ≤ 2.1.

The "x" may be 0.4 or more, 0.6 or more, 0.8 or more, 1.0 or more, or 1.05 or more, and may be 1.4 or less, or 1.2 or less.

The "y" may be 1.6 or more, 1.7 or more, 1.8 or more, or 1.9 or more, and may be 2.0 or less.

The "a" may be 0.6 or more, 0.7 or more, 0.8 or more, or 0.85 or more, and may be 0.9 or less.

The "b" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

The "c" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

### 2. Aggregate

The cathode active material in the present disclosure is an aggregate configured by a plurality of the primary particle. As shown in FIG. 1, the cathode active material 10 is configured by a plurality of the primary particle 1.

In the present disclosure, Dₐᵥₑ designates an average particle size of the aggregate. For the average particle size of the aggregate, 50 points of the maximum length of the aggregate are measured by a scanning electron microscope (SEM). From the numerical values of the 50 points measured, from the first largest to the fifth largest numerical values, and from the first smallest to the fifth smallest numerical values are excluded, and the average of the rest of 40 points are regarded as the Dₐᵥₑ. Also, in a particle distribution of the primary particle, from the low particle size side, d₁₀ designates 10% accumulation particle size of the primary particle, d₅₀ designates 50% accumulation particle size of the primary particle, and d₉₀ designates 90% accumulation particle size of the primary particle. The particle distribution of the primary particle can be measured by, for example, small angle X - ray scattering (SAXS).

The cathode active material usually satisfies 0.075 ≤ d₅₀/Dₐᵥₑ ≤ 1. The d₅₀/Dₐᵥₑ may be 0.1 or more, may be 0.2 or more, and may be 0.3 or more. Meanwhile, the d₅₀/Dₐᵥₑ may be 0.9 or less, may be 0.8 or less, and may be 0.7 or less.

The Dₐᵥₑ is, for example, 0.5 µm or more, may be 1.0 µm or more, may be 1.5 µm or more, and may be 2.0 µm or more. Meanwhile, the Dₐᵥₑ is, for example, 20 µm or less, may be 15 µm or less, and may be 10 µm or less. Also, the Dₐᵥₑ may be in the vicinity of 2.0 µm (such as 1.0 µm or more and 3.0 µm or less). Meanwhile, the d₅₀ is, for example, 0.5 µm or more, may be 1.0 µm or more, may be 1.5 µm or more, and may be 2.0 µm or more. Meanwhile, the d₅₀ is, for example, 10 µm or less, may be 8 µm or less, and may be 5 µm or less. Also, the d₅₀ may be in the vicinity of 2.0 µm (such as 1.0 µm or more and 3.0 µm or less).

The cathode active material usually satisfies 0.4 ≤ (d₉₀ - d₁₀)/d₅₀ ≤ 4.0. The smaller the value of the (d₉₀ - d₁₀)/d₅₀, the more uniform the particle size of the primary particle. The (d₉₀ - d₁₀)/d₅₀ may be 0.8 or more, and may be 1.2 or more. Meanwhile, the (d₉₀ - d₁₀)/d₅₀ may be 3.9 or less. Also, the (d₉₀ - d₁₀)/d₅₀ may be in the vicinity of 3.9 (such as 3.5 or more and 4.0 µm or less).

The number of the primary particle configuring the aggregate is, usually 2 or more, may be 5 or more, and may be 10 or more. Meanwhile, the number of the primary particle configuring the aggregate is, for example, 100 or less. Also, the shape of the aggregate is, for example, a granular shape.

When a pore diameter distribution by a mercury press-in method is performed to the cathode active material in the present disclosure, a peak is usually present in a range of 20 nm or more and 300 nm or less. The peak includes an inflection point. The peak may be present in the range of 20 nm (or 30 nm) or more and 200 nm (or 160 nm, 100 nm, or 80 nm) or less.

The pore amount in the peak is, for example, 0.010 mL/g or more, may be 0.015 mL/g or more, may be 0.020 mL/g or more, may be 0.025 mL/g or more, and may be 0.045 mL/g or more. Meanwhile, the pore amount in the peak is, for example, 0.100 mL/g or less.

In the present disclosure, B (boron) may be present in an interface between adjacent primary particles in the aggregate. Also, a concentration (B₁) of the B (boron) present in the interface between adjacent primary particles may be higher than a concentration (B₂) of B present on other surfaces (surfaces other than the interface) of the primary particle. For example, as described later, after a granulated body is produced by using a composition containing a coating material including B, the relation of B₁ > B₂ can be obtained by evaporating or decomposing the coating material by heat. The B₁/B₂ is, for example, 1.1 or more.

### 3. Cathode active material

The cathode active material in the present disclosure includes a crystalline primary particle containing Li, TM, which is a transition metal, and O. Also, the cathode active material is an aggregate configured by a plurality of the primary particle. The cathode active material is usually used for a battery. Also, there are no particular limitations on the method for producing the cathode active material, and examples thereof may include the method described in "D. Method for producing cathode active material" later.

The present disclosure can also provide a cathode active material powder including: a plurality of crystalline primary particle containing Li, TM, which is a transition metal, and O, as a cathode active material, wherein at least a part of the plurality of primary particle configures an aggregate; in a pore diameter distribution of the aggregate obtained by a mercury press-in method, a peak is present in a range of 20 nm or more and 300 nm or less; and when Dₐᵥₑ designates an average particle size of the aggregate, d₁₀ designates 10% accumulation particle size of the primary particle configuring the aggregate, d₅₀ designates 50% accumulation particle size of the primary particle configuring the aggregate, and d₉₀ designates 90% accumulation particle size of the primary particle configuring the aggregate, the aggregate satisfies 0.075 ≤ d₅₀/Dₐᵥₑ ≤ 1, and 0.4 ≤ (d₉₀ - d₁₀)/d₅₀ ≤ 4.0. A part of the plurality of primary particle may configure a single crystalline active material. Also, the rate of the aggregate to all the cathode active materials in the cathode active material powder is, for example, 5 mass% or more, may be 10 mass% or more, may be 20 mass% or more, may be 30 mass% or more, may be 40 mass% or more, may be 50 mass% or more, may be 60 mass% or more, and may be 70 mass% or more.

### B. Cathode mixture

The cathode mixture in the present disclosure contains the above described cathode active material.

According to the present disclosure, the above described cathode active material is used, and thus a cathode mixture of which resistance is reduced may be achieved. The cathode mixture may contain other materials (such as a conductive material and a binder) in addition to the cathode active material. Also, the cathode mixture may contain the above described cathode active material powder. Also, the cathode mixture may be in a powder shape, and may be in a slurry shape containing a dispersion medium.

The rate of the cathode active material in a solid content of the cathode mixture is, for example, 20 mass% or more, may be 30 mass% or more and may be 40 mass% or more. If the rate of the cathode active material is too little, there is a possibility that sufficient energy density may not be obtained. Meanwhile, the rate of the cathode active material in the solid content of the cathode mixture is, for example, 95 mass% or less, may be 70 mass% or less and may be 60 mass% or less. If the rate of the cathode active material is too much, there is a possibility that the ion conductivity and the electron conductivity may be relatively degraded.

The cathode mixture may contain a conductive material. By adding the conductive material, electron conductivity improves. Examples of the conductive material may include a carbon-based material, a metal particle, and a conductive polymer. Examples of the carbon-based conductive material may include a particulate carbon material such as acetylene black (AB) and Ketjen black (KB), and a fiber carbon material such as vapor grown carbon fiber (VGCF), carbon nanotube (CNT), and carbon nanofiber (CNF).

The rate of the conductive material in the solid content of the cathode mixture is, for example, 0.1 mass% or more. If the rate of the conductive material is too little, there is a possibility that the electron conduction path may be insufficient. Meanwhile, the rate of the conductive material in the solid content of the cathode mixture is, for example, 5 mass% or less. If the rate of the conductive material is too much, the rate of the cathode active material would be relatively little, and there is a possibility the energy density may decrease.

The cathode mixture may contain a binder. By adding the binder, the cathode active material layer in which the cathode active material does not easily fall off can be obtained. Examples of the binder may include a rubber-based binder such as styrene butadiene rubber (SBR), and butadiene rubber (BR); a polycarbonate-based binder such as carboxymethylcellulose; and a fluoride-based binder such as polyvinylidene fluoride (PVdF).

The rate of the binder in the solid content of the cathode mixture is, for example, 0.5 mass% or more. If the rate of the binder is too little, there is a possibility that the falling off of the cathode active material may not be sufficiently inhibited. Meanwhile, the rate of the binder in the solid content of the cathode mixture is, for example, 15 mass% or less. If the rate of the binder is too much, the rate of the cathode active material would be relatively little, and there is a possibility the energy density may decrease.

### C. Battery

FIG. 2 is a schematic cross-sectional view exemplifying the battery in the present disclosure. Battery 20 shown in FIG. 2 includes cathode active material layer 11, anode active material layer 12, electrolyte layer 13 arranged between the cathode active material layer 11 and the anode active material layer 12, cathode current collector 14 for collecting currents of the cathode active material layer 11, and anode current collector 15 for collecting currents of the anode active material layer 12. In the present disclosure, the cathode active material layer 11 contains the cathode mixture described in "B. Cathode mixture" above.

According to the present disclosure, by using the above described cathode mixture, a battery of which resistance is reduced may be achieved.

### 1. Cathode active material layer

The cathode active material layer contains at least a cathode active material. Also, the cathode active material layer may contain a conductive material and a binder. The cathode active material, the conductive material, and the binder are in the same contents as those described in "A. Cathode active material" above and "B. Cathode mixture" above.

The cathode active material layer may contain an electrolyte. The electrolyte is, for example, the later described liquid electrolyte. Meanwhile, the cathode active material layer may contain a solid electrolyte. The thickness of the cathode active material layer is, for example, 0.1 µm or more and 1000 µm or less, may be 1 µm or more and 500 µm or less, and may be 30 µm or more and 100 µm or less.

There are no particular limitations on the method for producing the cathode active material layer, and examples thereof may include a method in which a cathode slurry containing a cathode active material and a dispersion medium is applied on the cathode current collector and dried. Pressing treatment may be performed to the cathode active material layer after drying. By the pressing treatment, density of the cathode active material layer improves.

### 2. Anode active material layer

The anode active material layer contains at least an anode active material. Examples of the anode active material may include a carbon-based active material, a Li-based active material, a Si-based active material, and an oxide-based active material.

Examples of the carbon-based active material may include graphite, soft carbon, and hard carbon. The graphite may be a natural graphite, and may be an artificial graphite. Examples of the Li-based active material may include Li and a Li alloy. Examples of the Li alloy may include a Li-Si alloy. Examples of the Si-based active material may include Si, a SiC composite active material, a Si alloy and a Si oxide. Examples of the SiC composite active material may include an active material in which a carbon carrier is supported by Si or a Si alloy. examples of the oxide-based active material may include a lithium titanate such as Li₄Ti₅O₁₂.

The rate of the anode active material in the anode active material layer is, for example, 20 mass% or more, may be 30 mass% or more and may be 40 mass% or more. If the rate of the anode active material is too little, there is a possibility that sufficient energy density may not be obtained. Meanwhile, the rate of the anode active material in the anode active material layer is, for example, 95 mass% or less, may be 70 mass% or less and may be 60 mass% or less. If the rate of the anode active material is too much, there is a possibility that the ion conductivity and the electron conductivity in the anode active material layer may be relatively degraded.

The anode active material layer may contain at least one of a conductive material, a binder, and an electrolyte. The details of the conductive material, the binder, and the electrolyte are in the same contents as those described in "1. Cathode active material layer" above. Also, the thickness of the anode active material layer is, for example, 0.1 µm or more and 1000 µm or less, may be 1 µm or more and 500 µm or less, and may be 30 µm or more and 100 µm or less.

There are not particular limitations on the method for producing the anode active material layer, and examples thereof may include a method in which an anode slurry containing an anode active material and a dispersion medium is applied on the anode current collector and dried. Pressing treatment may be performed to the anode active material layer after drying. By the pressing treatment, density of the anode active material layer improves.

### 3. Electrolyte layer

The electrolyte layer is a layer arranged between the cathode active material layer and the anode active material layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as LiPF₆, LiBF₄, LiClO₄ and LiAsF₆; and an organic lithium salt such as LiCF₃SO₃, LiN(SO₂CF₃)₂, LiN(SO₂C₂F₅)₂, and LiC(SO₂CF₃)₃.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl methyl carbonate (EMC). The non-aqueous solvent may be a mixture of cyclic carbonate having high dielectric constant and high viscosity such as EC and PC with chain carbonate having low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based electrolyte such as lithiumbis(fluorosulfonil)imide, and lithiumbis(trifluoromethanesulfonil)imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic solid electrolyte such as a polymer electrolyte and a gel electrolyte; and an inorganic solid electrolyte such as a sulfide solid electrolyte, an oxide solid electrolyte, and a halide solid electrolyte.

### 4. Battery

The battery in the present disclosure preferably includes a cathode current collector for collecting currents of the cathode active material layer, and an anode current collector for collecting currents of the anode active material layer. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing a power generation elements (the cathode active material layer, the electrolyte layer, and the anode active material layer). Examples of the outer package may include a case type outer package and a laminate type outer package.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

### D. Method for producing cathode active material

FIG. 3 is a flow chart exemplifying the method for producing the cathode active material in the present disclosure. In FIG. 3, first, a mixture containing a transition metal hydroxide containing the TM, a lithium hydroxide, and a Li source other than the lithium hydroxide, is burned to obtain a burned substance (first burning step). Next, a composition, which is produced by crushing the burned substance to form a crushed product, and adding a coating material to the crushed product, is granulated so as to obtain a granulated body (granulating step). Next, the granulated body is burned to evaporate or decompose the coating material by heat (second burning step).

According to the present disclosure, by performing the above described each steps, a cathode active material of which resistance is reduced can be obtained. In specific, in the first burning step, the particle size of the primary particles can be made non-uniform by using two kinds of Li sources. Also, after producing the granulated body containing the coating material, by evaporating or decomposing the coating material by heat, the particle sizes of the primary particle can be non-uniform as well as minute void (of which pore diameter is 20 nm or more and 300 nm or less) suitable for ion conduction can be produced inside the primary particle at the same time.

### 1. First burning step

The first burning step is a step of burning a mixture containing a transition metal hydroxide containing the TM, a lithium hydroxide, and a Li source other than the lithium hydroxide, to obtain a burned substance.

The transition metal hydroxide contains a TM, which is a transition metal. The transition metal hydroxide corresponds to a precursor of the cathode active material. The transition metal hydroxide typically does not contain Li, but may contain Li.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include NiSo₄, and Ni(NO₃)₂. Examples of the Co source may include CoSO₄, Co(NO₃)₂, and Co(NO₃)₃. Examples of the Mn source may include MnSO₄, and Mn(NO₃)₂. The composition of the raw material aqueous solution is appropriately adjusted in accordance with the intended cathode active material.

Next, a sodium hydroxide aqueous solution is added to a reaction container, and the raw material aqueous solution and NH₃ aqueous solution are dropped thereto while maintaining the pH alkaline (such as pH 11.3 to 12.0). The reaction temperature is not particularly limited, but for example, it is 50°C or more and 65°C or less. After the reaction completed, it is preferable to take out the transition metal hydroxide by filtrating, and to dry it after washing with water. The reaction time is, for example, 2 hours or more and 12 hours or less. If the reaction time is long, the reaction material to be supplied will increase, and as a result, the average particle size of the aggregate will be large.

In the first burning step, a mixture containing a transition metal hydroxide, a lithium hydroxide, and a Li source other than the lithium hydroxide, is produced. The lithium hydroxide is the Li source and also works as a molten salt (flux) at the same time. When the mixture contains the molten salt, the primary particle can sufficiently grow. Meanwhile, examples of the Li source other than the lithium hydroxide may include lithium carbonate, lithium nitrate, lithium acetate, lithium oxide, and lithium chloride. Since the reaction temperatures of the lithium hydroxide and the other Li sources are different, the particle sizes of the primary particle can be made non-uniform.

The molar ratio (based on Li) of the lithium hydroxide with respect to the total of the lithium hydroxide and the other Li sources is, for example, larger than 50 mol%, may be 60 mol% or more, may be 70 mol% or more, may be 80 mol% or more, and may be 90 mol% or more. Also, in the mixture, the molar ratio (Li'/TM) of Li to the TM included in the transition metal hydroxide is, for example, 1.1 or more, may be 1.15 or more, and may be 1.2 or more. Meanwhile, the Li'/TM is, for example, 1.6 or less and may be 1.5 or less.

In the first burning step, the mixture is burned to obtain a burned substance. The burning temperature is, for example, 500°C or more and 1000°C or less. In the first burning step, two steps or more of burning with different burning temperatures may be performed. Also, the burning time in the first burning step is not particularly limited, and for example, it is 5 hours or more and 15 hours or less, and may be 8 hours or more and 12 hours or less. The atmosphere in the first burning step is usually an atmosphere wherein oxygen is present. Examples of the burning method in the first burning step may include a method using a burning furnace such as a muffle furnace and an electric furnace.

### 2. Granulating step

The granulating step is a step of granulating a composition, which is produced by crushing the burned substance to form a crushed product, and adding a coating material to the crushed product, so as to obtain a granulated body.

Examples of the method for crushing the burned substance may include jet milling, hammer milling, lab milling, and ball milling. The crushing conditions are not particularly limited, and adjusted so as to obtain the intended aggregate.

Examples of the coating material may include a boron-containing compound such as a boric acid, saccharides such as glucose and fructose, and a sodium hydrogen carbonate. The adding amount of the coating material is not particularly limited, and adjusted so as to obtain the intended aggregate.

Examples of the method for granulating the composition may include a spray-dry method. In the spray-dry method, for example, the composition is dispersed in water, and the dispersed liquid is sprayed using a spray-dry device. The heating temperature of the spray-dry device is, for example, 150°C or more and 250°C or less.

### 3. Second burning step

The second burning step is a step of burning the granulated body to evaporate or decompose the coating material by heat.

The burning temperature in the second burning step is, for example, preferably higher than a boiling point of the coating material. For example, when the coating material is a boric acid, since the boiling point of the boric acid is 300°C, the burning temperature is preferably higher than 300°C. The burning temperature in the second burning step is, for example, 250°C or more and 600°C or less, and may be 300°C or more and 550°C or less. The temperature raising speed in the second burning step is, for example, 30°C/min or more, may be 40°C/min or more, and may be 50°C/min or more. By making the temperature raising speed fast, the evaporation or the heat-decomposition of the coating material is promoted.

The burning time in the second burning step is not particularly limited, and for example, it is 3 hours or more and 7 hours or less, and may be 4 hours or more and 6 hours or less. The burning time in the second burning step may be shorter than the burning time in the first burning step. The atmosphere in the second burning step is usually an atmosphere wherein oxygen is present. Examples of the burning method in the second burning step may include a method using a burning furnace such as a muffle furnace and an electric furnace.

### 4. Cathode active material

The cathode active material obtained by the above described each steps is in the same contents as those described in "A. Cathode active material" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Comparative Example 1]

### <Production of cathode active material>

As raw materials, NiSO₄, CoSO₄, and MnSO₄ were prepared, and these were dissolved in an ion exchanged water to prepare a raw material aqueous solution. The ratio of Ni, Co, and Mn in the raw material aqueous solution was Ni : Co : Mn = 8 : 1 : 1 in the molar ratio. Also, the concentration of the raw material aqueous solution (ratio of all the raw materials to the raw material aqueous solution) was 30 mass%.

After that, fixed amount of NH₃ aqueous solution was put in a reaction container, and inside the reaction container was substituted with nitrogen by stirring with a stirrer. NaOH aqueous solution was added to the reaction container, and the raw material aqueous solution and NH₃ aqueous solution were dropped thereto while maintaining the pH alkaline (pH = 12) and controlling the temperature constant, and thereby a transition metal hydroxide was deposited. The reaction temperature was 60°C, and the reaction time was 3 hours. Next, the deposited transition metal hydroxide was taken out by filtration, and washed by adding an ion exchanged water and dispersing with a spoon. The transition metal hydroxide after washed by the water was dried in the conditions of 120°C and 16 hours, and thereby a transition metal hydroxide that was a precursor was obtained.

After that, a Li source (LiOH) was added to the obtained precursor, mixed with an agate mortar, and thereby a mixture was obtained. The adding amount of the Li source was adjusted so that a molar ratio (Li/NMC) of Li included in the Li source to the total (NCM) of Ni, Co, and Mn included in the precursor became 1.1. The obtained mixture was burned in a burning furnace in the conditions of 900°C, an oxygen atmosphere, and 10 hours, to obtain a burned body. The obtained burned body was crushed using jet milling, the particle size was adjusted, and thereby a cathode active material was obtained.

### <Production of battery>

A battery was produced using the obtained cathode active material. In specific, a cathode mixture paste including a cathode active material, a conductive material (acetylene black), and a binder (polyvinylidene fluoride) in a mass ratio of the cathode active material : the conductive material : the binder = 88 : 10 : 2, was applied on a surface of a metal foil that was a cathode current collector using a film applicator with film thickness adjusting function (from Allgood Corporation). After that, the product was dried by a dryer at 80°C for 5 minutes, and a cathode including the cathode current collector and the cathode active material layer was obtained.

Next, an anode mixture paste including an anode active material (natural graphite) and a binder (SBR and CMC) was applied on a surface of a metal foil that was an anode current collector using a film applicator with film thickness adjusting function (from Allgood Corporation). After that, the product was dried by a dryer at 80°C for 5 minutes, and thereby an anode including the anode current collector and the anode active material layer was obtained. Next, as a liquid electrolyte, LiPF₆ solution having the concentration of 1 M was prepared. As the solvent of the liquid electrolyte, a mixture solvent in which ethylene carbonate (EC), dimethyl carbonate (DMC), and ethyl methyl carbonate (EMC) were mixed in a volume ratio of EC : DMC : EMC = 3 : 4 : 3 was used. By using the cathode, the anode, and the liquid electrolyte, a winding cylindrical shaped battery was obtained.

### [Example 1]

A precursor (transition metal hydroxide) was obtained in the same manner as in Comparative Example 1. A Li sources (LiOH and Li₂CO₃) were added to the obtained precursor, mixed with an agate mortar, and thereby a mixture was obtained. The adding amount of the Li source was adjusted so that a molar ratio (Li/NMC) of Li included in the Li source to the total (NCM) of Ni, Co, and Mn included in the precursor became 1.1. Also, LiOH and Li₂CO₃ were adjusted so as to be the molar ratio of LiOH : Li₂CO₃ = 95 : 2.5.

The obtained mixture was burned in a burning furnace in the conditions of 500°C, an oxygen atmosphere, and 5 hours, and further burned in the conditions of 800°C, an oxygen atmosphere, and 5 hours. The obtained burned substance was crushed with a mortal to obtain a first crushed product. To a beaker, 100 ml of ion-exchanged water was put, 30 g of the first crushed product was added thereto while stirring with a stirrer, and then stirred for 5 minutes. Next, a solid content was separated by sucking filtration, and the separated solid content was dried in the conditions of 80°C and 12 hours. The dried first crushed product was cracked using jet milling to obtain a second crushed product.

To a beaker, 100 ml of ion-exchanged water was put, further, 3 g of a boric acid (H₃BO₃) was dissolved, 30 g of the second crushed product was added thereto while stirring with a stirrer, and then stirred for 5 minutes. Next, the product was granulated using a spray-dry device (from Nihon BUCHI K. K.). The obtained granulated body was heated until 350°C at a temperature raising speed of 50°C/min, burned at 350°C for 5 hours, and thereby a cathode active material was obtained. A battery was obtained in the same manner as in Comparative Example 1 except that the obtained cathode active material was used.

### [Example 2]

A cathode active material and a battery were obtained in the same manner as in Example 1 except that the ratio of LiOH and Li₂CO₃ were changed to the molar ratio of LiOH : Li₂CO₃ = 70 : 15.

### [Example 3]

A precursor was obtained in the same manner as in Comparative Example 1 except that the reaction time was changed from 3 hours to 10 hours. A cathode active material and a battery were obtained in the same manner as in Example 1 except that the ratio of LiOH and Li₂CO₃ were changed to the molar ratio of LiOH : Li₂CO₃ = 80 : 10.

### [Comparative Example 2]

A cathode active material and a battery were obtained in the same manner as in Example 1 except that the ratio of LiOH and Li₂CO₃ were changed to the molar ratio of LiOH : Li₂CO₃ = 50 : 25.

### [Evaluation]

### <XRD measurement>

An X-ray diffraction (XRD) measurement using CuKα ray was respectively conducted to the cathode active materials obtained in Examples 1 to 3 and Comparative Examples 1 and 2. As a result, it was confirmed that all the cathode active materials obtained in Examples 1 to 3 and Comparative Examples 1, 2 had the layered rock salt type crystal phase belonging to the space group R-3m. In other words, it was confirmed that the primary particle containing Ni, Co, and Mn included the layered rock salt type crystal phase.

### <Pore diameter distribution measurement>

The pore diameter distribution measurement by a mercury press-in method was performed to the cathode active materials obtained in Examples 1 to 3. In specific, the pore diameter distribution of the cathode active material was respectively measured by injecting mercury to a sample tube in which 1 g of the cathode active material was sealed, using a mercury press-in type pore distribution measurement device from Micromeritics. The results are shown in Table 1.

### <Initial resistance>

The initial resistance of the batteries obtained in Examples 1 to 3 and Comparative Examples 1 and 2, was respectively measured. In specific, the batteries were charged until 4.3 V, and then discharged until 3.7 V. After that, the voltage drop (V) when discharged for 10 seconds under the conditions of 0°C and each C rate of 0.1 C, 0.3 C, 0.5 C, 0.7 C, and 1.0 C was respectively measured. The relation of the voltage drop (V) with respect to the current value was plotted, and the inclination when a close to straight line was drawn by a linear function was defined as a resistance (IV resistance). The results are shown in Table 1. Incidentally, the value of initial resistance in Table 1 is the relative value when the initial resistance of Comparative Example 1 is regarded as 100%.

**[Table 1]**

| | Ratio | | | | Peak position (nm) | Particle size | | | | Initial resistance (%) |
|---|---|---|---|---|---|---|---|---|---|---|
| | Li | Ni | Co | Mn | | d50 | Dₐᵥₑ | d₅₀/Dₐᵥₑ | (d90-d10)/d50 | |
| Comp. Ex. 1 | 1.1 | 0.8 | 0.1 | 0.1 | - | 4 | 3.5 | 1.14 | 0.3 | 100 |
| Example 1 | 1.1 | 0.8 | 0.1 | 0.1 | 32 | 2 | 2 | 1.00 | 0.4 | 82 |
| Example 2 | 1.1 | 0.8 | 0.1 | 0.1 | 56 | 2 | 2 | 1.00 | 3.9 | 79 |
| Example 3 | 1.1 | 0.8 | 0.1 | 0.1 | 48 | 1.5 | 20 | 0.075 | 2.8 | 86 |
| Comp. Ex. 2 | 1.1 | 0.8 | 0.1 | 0.1 | - | 2 | 2 | 1.00 | 4.2 | 101 |

As shown in Table 1, it was confirmed that the initial resistance was lower in Examples 1 to 3 compared to Comparative Example 1. It is presumed that, when the minute void (void having a pore diameter of 20 nm or more and 300 nm or less) was present inside the aggregate of the primary particle, the ion conductivity inside the aggregate improved. Also, it was confirmed that the initial resistance was higher in Comparative Example 2 compared to Examples 1 to 3. It is presumed that the unevenness of the particle size of the primary particle configuring the aggregate was too large and the ion conductivity inside the aggregate did not sufficiently improved.

### Reference Sings List

- 1: primary particle
- 10: cathode active material
- 11: cathode active material layer
- 12: anode active material layer
- 13: electrolyte layer
- 14: cathode current collector
- 15: anode current collector
- 20: battery

## Claims

1. A cathode active material **characterized by** comprising:
a crystalline primary particle containing Li, TM, which is a transition metal, and O, wherein
the cathode active material is an aggregate configured by a plurality of the primary particle;
in a pore diameter distribution obtained by a mercury press-in method, a peak is present in a range of 20 nm or more and 300 nm or less; and
when Dₐᵥₑ designates an average particle size of the aggregate, d₁₀ designates 10% accumulation particle size of the primary particle, d₅₀ designates 50% accumulation particle size of the primary particle, and d₉₀ designates 90% accumulation particle size of the primary particle,
the cathode active material satisfies 0.075 ≤ d₅₀/Dₐᵥₑ ≤ 1, and 0.4 ≤ (d₉₀ - d₁₀)/d₅₀ ≤ 4.0.

2. The cathode active material according to claim 1, **characterized in that** the peak is present in a range of 30 nm or more and 200 nm or less in the pore diameter distribution.

3. The cathode active material according to claim 1, **characterized in that** the d₅₀ is 0.5 µm or more.

4. The cathode active material according to claim 1, **characterized in that** the primary particle contains at least one kind of Ni, Co, and Mn as the TM.

5. The cathode active material according to claim 1, **characterized in that** the primary particle includes a layered rock salt type crystal structure.

6. The cathode active material according to claim 1, **characterized in that** B (boron) is present in an interface between adjacent the primary particle in the aggregate.

7. A cathode mixture **characterized by** comprising the cathode active material according to any one of claims 1 to 6.

8. A battery comprising a cathode active material layer containing a cathode active material, an anode active material layer containing an anode active material, and an electrolyte layer arranged between the cathode active material layer and the anode active material layer, **characterized in that**
the cathode active material layer contains the cathode mixture according to claim 7.

9. A method for producing the cathode active material according to any one of claims 1 to 6, the method **characterized by** comprising:
a first burning step of burning a mixture containing a transition metal hydroxide containing the TM, a lithium hydroxide, and a Li source other than the lithium hydroxide, to obtain a burned substance,
a granulating step of granulating a composition, which is produced by crushing the burned substance to form a crushed product, and adding a coating material to the crushed product, so as to obtain a granulated body, and
a second burning step of burning the granulated body to evaporate or decompose the coating material by heat.

10. The method for producing the cathode active material according to claim 9, **characterized in that** the coating material is a boric acid.
